# EUROPEAN PATENT APPLICATION

(11) **EP 4 633 011 A1**
(43) Date of publication of application: **15.10.2025**
(21) Application number: 25166123.7
(22) Date of filing: 25.03.2025
(51) Int. Cl.: H02K 5/167, H02K 7/08

(54) **LINEAR MOTOR, ELECTROMAGNETIC SHOCK ABSORBER, AND VEHICLE**

(30) Priority: 29.03.2024 CN 202410395749
(71) Applicant: BYD Company Limited, Shenzhen, Guangdong 518118 (CN)
(72) Inventor: ZHANG, Jixiang, Shenzhen (CN); MA, Bingqing, Shenzhen (CN); TAN, Guodong, Shenzhen (CN)
(74) Representative: Taor, Simon Edward William

(57) **Abstract**

The present application discloses a linear motor, an electromagnetic shock absorber, and a vehicle. The linear motor includes: a mover component, the mover component having a housing; and a stator assembly, a portion of the stator assembly being arranged in the housing along an axial direction of the housing. The stator assembly includes a stator core. A first cavity and a second cavity are respectively arranged between two ends of the stator core in an axial direction and the housing. A first sliding bearing is arranged between the stator assembly and the mover component. A first channel is provided on the first sliding bearing to enlarge a communication air gap for the first cavity and the second cavity. Based on the linear motor of the present application, the stator assembly and the mover component can move smoothly relative to each other, which is conductive to prolonging the service life, facilitating the machining and manufacturing, and reducing the production costs.

## Description

### FIELD

The present application relates to the technical field of motors, and more specifically, to a linear motor, an electromagnetic shock absorber, and a vehicle.

### BACKGROUND

In the related art, when a mover component moves along an axial direction of a stator assembly, resistance to a relative movement between the stator assembly and the mover component is high, which causes problems of high energy consumption of a linear motor, damage to the linear motor because the linear motor easily generates heat, and the like, and shortens the service life.

### SUMMARY

The present application aims to solve at least one of the technical problems existing in the related art. To this end, one objective of the present application is to provide a linear motor. The linear motor can enable a stator assembly and a mover component to move smoothly relative to each other, which is conductive to prolonging the service life, facilitating the machining and manufacturing, and reducing the production costs.

Another objective of the present application is to provide an electromagnetic shock absorber having the above linear motor.

Still another objective of the present application is to provide a vehicle having the above electromagnetic shock absorber.

The linear motor according to an embodiment of the present application includes: a mover component, the mover component having a housing; and a stator assembly, a portion of the stator assembly being arranged in the housing along an axial direction of the housing. The stator assembly includes a stator core. A first cavity and a second cavity are respectively arranged between two ends of the stator core in an axial direction and the housing. A first sliding bearing is arranged between the stator assembly and the mover component. A first channel is provided on the first sliding bearing to enlarge a communication air gap for the first cavity and the second cavity.

In the linear motor according to this embodiment of the present application, the portion of the stator assembly is arranged in the housing along the axial direction of the housing. The first cavity and the second cavity are respectively arranged between the two ends of the stator core of the stator assembly in the axial direction and the housing. The first sliding bearing is arranged between the stator assembly and the mover component. The first channel is provided on the first sliding bearing to enlarge the communication air gap between the first cavity and the second cavity. Therefore, an airflow can flow through an air gap between the stator assembly and the mover component. Moreover, the airflow can flow between the first cavity and the second cavity through the first channel, which enlarges a flow area between the first cavity and the second cavity, facilitates the adjustment on a pressure difference between the first cavity and the second cavity, enables the stator assembly and the mover component to move more smoothly relative to each other, and is beneficial for prolonging the service life of the linear motor. Furthermore, it is more convenient and easier to machine the first channel on the first sliding bearing. This is conductive to reducing the production costs.

In addition, the linear motor according to the above embodiment of the present application may further have the following additional technical features:
In the linear motor according to some embodiments of the present application, the housing includes: a housing body, a portion of the stator assembly being arranged in the housing body along an axial direction of the housing body; and a guide column, the guide column being arranged in the housing body. A guide hole is provided on the stator assembly. The guide column extends along an axial direction of the stator assembly into the guide hole. The guide hole is communicated with the second cavity. The first sliding bearing is arranged between an outer circumferential wall of the guide column and a hole wall of the guide hole. The first cavity is communicated with the guide hole through the first channel.

According to some embodiments of the present application, an opening is provided on the stator assembly. The opening is configured to communicate the guide hole with the second cavity.

According to some embodiments of the present application, the stator assembly includes: a stator mandrel, the opening being provided on the stator mandrel; and a winding, the winding sleeving the stator mandrel. The opening is located on a side of the winding close to the second cavity. The linear motor further includes a conductive component, and the conductive component is located in the stator mandrel and is connected to the winding through the opening.

According to some embodiments of the present application, the first channel extends along an axial direction of the first sliding bearing.

According to some embodiments of the present application, multiple first channels, spaced away from each other along a circumferential direction of the first sliding bearing, are provided.

According to some embodiments of the present application, the multiple first channels are grooves located on an inner circumferential wall of the first sliding bearing.

According to some embodiments of the present application, the multiple first channels include first grooves and second grooves. The first grooves and the second grooves are oppositely arranged.

According to some embodiments of the present application, the multiple first channels are non-uniformly distributed along the circumferential direction of the first sliding bearing.

According to some embodiments of the present application, grease is provided in the first channels, and the grease does not block the first channels.

According to some embodiments of the present application, an end of the housing in an axial direction is opened to form an open hole. A portion of the stator assembly is arranged in the open hole in a penetrating manner. A sealing member is arranged between a hole wall of the open hole and an outer circumferential wall of the stator assembly.

According to some embodiments of the present application, a second sliding bearing is further arranged between the hole wall of the open hole and the outer circumferential wall of the stator assembly. The second sliding bearing is located on a side of the sealing member close to the second cavity.

According to some embodiments of the present application, a fourth cavity is defined between the second sliding bearing and the sealing member. A second channel is provided on the second sliding bearing, to communicate the second cavity with the fourth cavity.

According to some embodiments of the present application, the second channel extends along an axial direction of the second sliding bearing (42).

According to some embodiments of the present application, the second sliding bearing includes: a body piece, the stator assembly being arranged in the body piece in a penetrating manner, and the second channel being arranged on the body piece; and a stop piece, the stop piece being arranged on an outer circumferential wall of the body piece and extending along a circumferential direction of the body piece, and an end of the stop piece in an axial direction resisting against the housing.

According to some embodiments of the present application, a boss is arranged on an inner wall surface of the end, provided with the open hole, of the housing. The boss surrounds the open hole. A portion of the second sliding bearing is located between an inner circumferential wall of the boss and the outer circumferential wall of the stator assembly.

According to some embodiments of the present application, a ventilation valve is arranged on a side wall of the housing to communicate the first cavity or the second cavity with an external environment.

An electromagnetic shock absorber according to an embodiment of the present application includes the linear motor according to the above embodiment of the present application.

In the electromagnetic shock absorber according to this embodiment of the present application, the portion of the stator assembly is arranged in the housing along the axial direction of the housing. The first cavity and the second cavity are respectively arranged between the two ends of the stator core of the stator assembly in the axial direction and the housing. The first sliding bearing is arranged between the stator assembly and the mover component. The first channel is provided on the first sliding bearing to enlarge the communication air gap between the first cavity and the second cavity. Therefore, an airflow can flow through an air gap between the stator assembly and the mover component. Moreover, the airflow can flow between the first cavity and the second cavity through the first channel, which enlarges a flow area between the first cavity and the second cavity, facilitates the adjustment on a pressure difference between the first cavity and the second cavity, enables the stator assembly and the mover component to move more smoothly relative to each other, and is beneficial for prolonging the service life of the linear motor. Furthermore, it is more convenient and easier to machine the first channel on the first sliding bearing. This is conductive to reducing the production costs.

A vehicle according to an embodiment of the present application includes the electromagnetic shock absorber according to the above embodiment of the present application.

In the vehicle according to this embodiment of the present application, the portion of the stator assembly is arranged in the housing along the axial direction of the housing. The first cavity and the second cavity are respectively arranged between the two ends of the stator core of the stator assembly in the axial direction and the housing. The first sliding bearing is arranged between the stator assembly and the mover component. The first channel is provided on the first sliding bearing to enlarge the communication air gap between the first cavity and the second cavity. Therefore, an airflow can flow through an air gap between the stator assembly and the mover component. Moreover, the airflow can flow between the first cavity and the second cavity through the first channel, which enlarges a flow area between the first cavity and the second cavity, facilitates the adjustment on a pressure difference between the first cavity and the second cavity, enables the stator assembly and the mover component to move more smoothly relative to each other, and is beneficial for prolonging the service life of the linear motor. Furthermore, it is more convenient and easier to machine the first channel on the first sliding bearing. This is conductive to reducing the production costs.

The additional aspects and advantages of the present application will be set forth in part in the description below, parts of which will become apparent from the description below, or will be understood by the practice of the present application.

### BRIEF DESCRIPTION OF THE DRAWINGS

These and other aspects and advantages of embodiments of the present application will become apparent and more readily appreciated from the following descriptions made with reference to the drawings. In the drawings:
FIG. 1 is a cross-sectional view of an electromagnetic shock absorber according to an embodiment of the present application, longitudinally taken along an axis;
FIG. 2 is a schematic diagram of an enlarged structure of circle A in FIG. 1;
FIG. 3 is a schematic diagram of an enlarged structure of circle B in FIG. 1;
FIG. 4 is a cross-sectional view of a linear motor according to an embodiment of the present application, longitudinally taken along an axis;
FIG. 5 is a cross-sectional view of a linear motor according to an embodiment of the present application, longitudinally taken along an axis;
FIG. 6 is a partially schematic structural diagram of a linear motor according to an embodiment of the present application;
FIG. 7 is a schematic structural diagram of a linear motor according to an embodiment of the present application with a guide column and a guide hole cooperating with each other;
FIG. 8 is a schematic structural diagram of a linear motor according to an embodiment of the present application with a stator assembly and a first sliding bearing cooperating with each other;
FIG. 9 is a schematic structural diagram of a linear motor according to an embodiment of the present application with a housing and a second sliding bearing cooperating with each other;
FIG. 10 is a schematic structural diagram of a first sliding bearing of a linear motor according to some embodiments of the present application;
FIG. 11 is a schematic structural diagram of a second sliding bearing of a linear motor according to an embodiment of the present application;
FIG. 12 is a schematic structural diagram of a stator mandrel of a linear motor according to an embodiment of the present application; and
FIG. 13 is a schematic structural diagram of a first sliding bearing of a linear motor according to some other embodiment of the present application.

### DETAILED DESCRIPTION

Detail description of the embodiments of present application will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to explain the present application, instead of limiting the present application.

In the descriptions of the present application, it should be understood that orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the present application instead of indicating or implying that devices or elements indicated need to have particular orientations, and be constructed and operated in the particular orientations, so that these terms are not construed as limiting the present application.

In the description of the present application, "first feature" and "second feature" may include one or more of the features. "Plurality of/multiple" means two or more. The first feature being "above" or "below" the second feature may include direct contact between the first feature and the second feature, or indirect contact between the first feature and the second feature through another feature between them. The first feature being "over", "above", and "on" the second feature may include the first feature being directly above and diagonally above the second feature, or indicates that the first feature is horizontally higher than the second feature.

A linear motor 100 according to an embodiment of the present application will be described below with reference to the accompanying drawings.

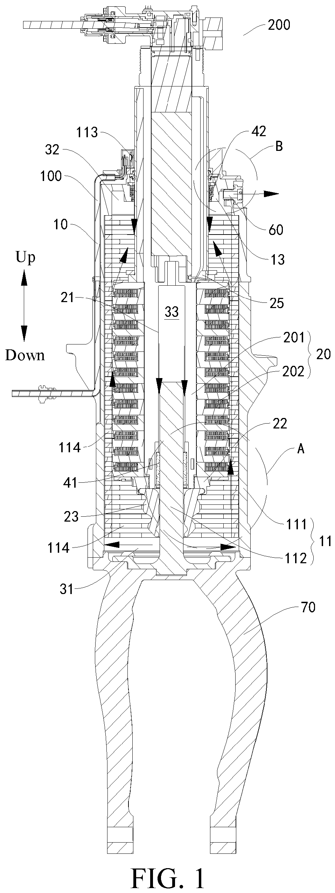

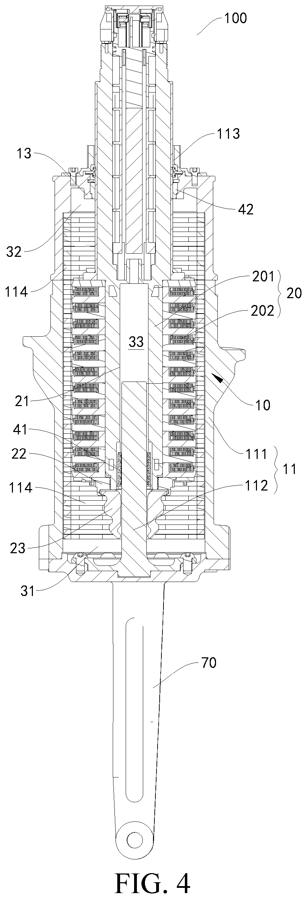

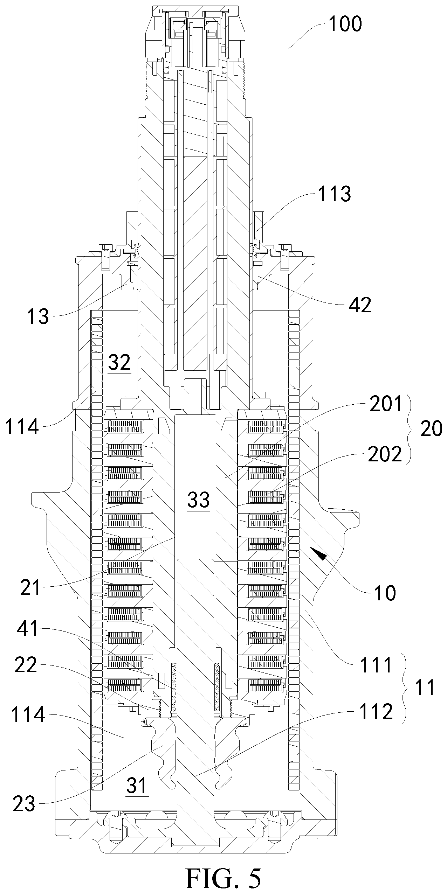

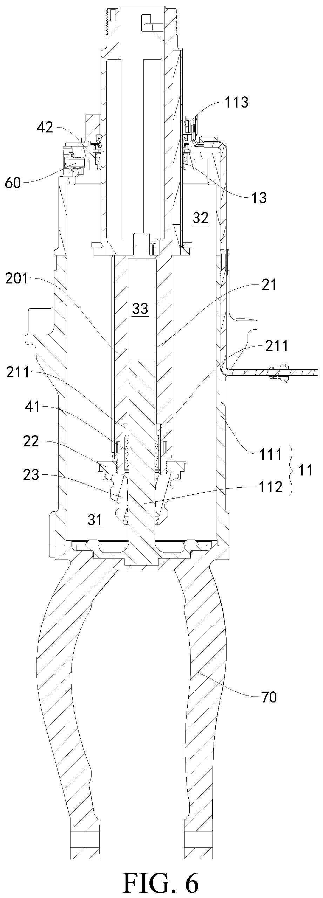

Referring to FIG. 1 to FIG. 7, the linear motor 100 according to this embodiment of the present application may include: a mover component 10 and a stator assembly 20.

The mover component 10 may have a housing 11. A portion of the stator assembly 20 is arranged in the housing 11 along an axial direction (such as an up-down direction shown in FIG. 1) of the housing 11. The stator assembly 20 includes a stator core 202. A first cavity 31 and a second cavity 32 are respectively arranged between two ends of the stator core 202 in an axial direction (such as the up-down direction shown in FIG. 1) and the housing 11, so that the mover component 10 can move relatively along an axial direction of the stator assembly 20, achieving operation of the linear motor 100 and meeting working requirements of the linear motor 100. Moreover, a first sliding bearing 41 is arranged between the stator assembly 20 and the mover component 10. Through the first sliding bearing 41, friction between the stator assembly 20 and the mover component 10 can be reduced, which effectively reduces the energy loss and is conductive to reducing the wear and prolonging the service life of the linear motor 100.

An air gap is provided between the stator assembly 20 and the mover component 10, which facilitates a relative movement between the stator assembly 20 and the mover component 10. A communication between the first cavity 31 and the second cavity 32 is achieved by the air gap. In addition, the problems of vibration, noise, and the like can be reduced by diminishing the air gap between the stator assembly 20 and the mover component 10. However, the inventor of the present application has found that in the related art, when the mover component moves along the axial direction of the stator assembly, pressures in the first cavity and the second cavity change. Due to the small air gap between the stator assembly and the mover component, a flow area between the first cavity and the second cavity is small, consequently increasing resistance to the relative movement between the stator assembly and the mover component. Energy consumption of the linear motor increases, causing the linear motor to generate heat and be easily damaged, and shortening the service life.

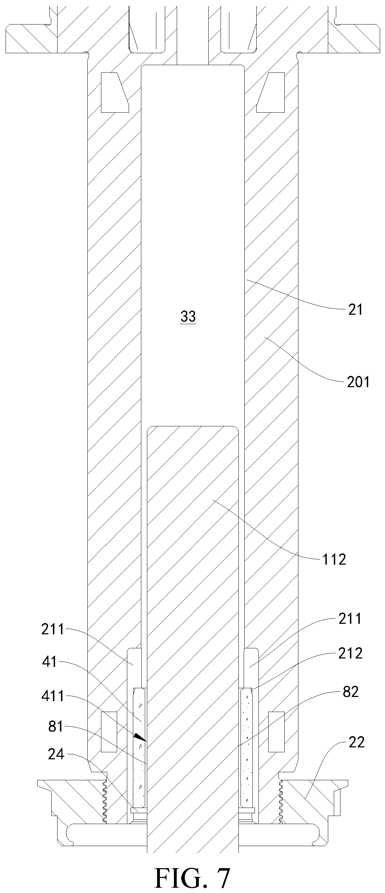

Therefore, to solve the problem of high resistance to the relative movement between the stator assembly 20 and the mover component 10, in the present application, as shown in FIG. 7, FIG. 8, FIG. 10, and FIG. 13, a first channel 411 is provided on the first sliding bearing 41, which can enlarge a communication air gap (e.g. increase the air communication) between the first cavity 31 and the second cavity 32, so that an airflow can flow through an air gap between the stator assembly 20 and the mover component 10, and the airflow can flow between the first cavity 31 and the second cavity 32 through the first channel 411, thereby enlarging a flow area between the first cavity 31 and the second cavity 32. It is conducive to adjusting a pressure difference between the first cavity 31 and the second cavity 32, effectively improves the atmospheric pressure, and can reduce or avoid the problems of fluctuation and the like due to the impact of the pressure difference on the relative movement between the stator assembly 20 and the mover component 10. This can reduce the resistance to the relative movement between the stator assembly 20 and the mover component 10. For example, the air resistance caused by changes in the volumes of the first cavity 31 and the second cavity 32 during compression and stretching can be reduced, so that the stator assembly 20 and the mover component 10 move more smoothly relative to each other, which is conductive to prolonging the service life of the linear motor 100. Moreover, it is more convenient to machine the first channel 411 on the first sliding bearing 41, achieving easy machining. It is beneficial to reduce the production costs.

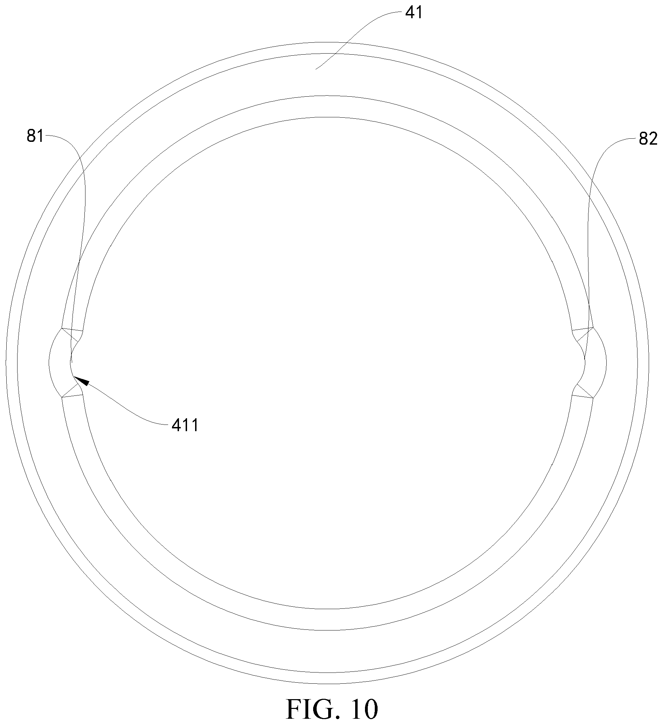

In some embodiments, the first channel 411 may be a through hole provided on the first sliding bearing 41, or the first channel 411 may be a through slot provided on the first sliding bearing 41, as shown in FIG. 10. Both the through hole and the through slot can meet requirements for enlarging the communication air gap between the first cavity 31 and the second cavity 32. In addition, the structure is simple, and it is convenient for machining and manufacturing. As discussed, the first channel 411 increases the air communication between the first cavity 31 and the second cavity 32.

In some embodiments, as shown in FIG. 1, FIG. 2, and FIG. 4, magnetic steel 114 is arranged on an inner circumferential wall of the housing 11. The stator assembly 20 further includes a stator mandrel 201. The stator mandrel 201 is arranged in the housing 11 in a penetrating manner. The stator core 202 sleeves the stator mandrel 201 to fix the stator core 202. An air gap is defined between an outer circumferential wall of the stator core 202 and an inner circumferential wall of the magnetic steel 114, which can meet usage requirements of the linear motor 100.

In some embodiments, as shown in FIG. 1, FIG. 2, and FIG. 4 to FIG. 7, a limiting member 22 is arranged at an end (such as a lower end shown in FIG. 1) of the stator mandrel 201 in the axial direction. The limiting member 22 resists against an end (such as the lower end shown in FIG. 1) of the stator core 202 in the axial direction, which can ensure reliable fixation of the stator core 202 on the stator mandrel 201, avoid the stator core 202 from falling off from the stator mandrel 201, and ensure the safety of operation of the linear motor 100.

It should be noted that, for ease of description, the orientations such as "up" and "down" in the present application are based on the orientation relationships shown in the accompanying drawings, and are not limited to an actual application process.

In some embodiments, the first sliding bearing 41 may be integrally formed, which facilitates the machining and manufacturing of the first sliding bearing 41. It is beneficial to reduce the production costs. For example, the first sliding bearing 41 may be formed by metallurgic sintering and pressing on powder. An air hole is provided on the first sliding bearing 41. The air hole is filled with grease through high pressure. The grease can lubricate the relative movement between the stator assembly 20 and the mover component 10, making the relative movement between the stator assembly 20 and the mover component 10 smoother and effectively reducing friction. For example, the grease may be lubricating oil, lubricating grease, or the like.

In the linear motor 100 according to this embodiment of the present application, the portion of the stator assembly 20 is arranged in the housing 11 along the axial direction of the housing 11. The first cavity 31 and the second cavity 32 are respectively arranged between the two ends of the stator core 202 of the stator assembly 20 in the axial direction and the housing 11. The first sliding bearing 41 is arranged between the stator assembly 20 and the mover component 10. The first channel 411 is provided on the first sliding bearing 41 to enlarge the communication air gap between the first cavity 31 and the second cavity 32. Therefore, an airflow can flow through an air gap between the stator assembly 20 and the mover component 10. Moreover, the airflow can flow between the first cavity 31 and the second cavity 32 through the first channel 411, which enlarges a flow area between the first cavity 31 and the second cavity 32, facilitates the adjustment on a pressure difference between the first cavity 31 and the second cavity 32, enables the stator assembly 20 and the mover component 10 to move with each other more smoothly, and is beneficial for prolonging the service life of the linear motor 100. Furthermore, it is more convenient and easier to machine the first channel 411 on the first sliding bearing 41. This is conductive to reducing the production costs.

In some embodiments of the present application, as shown in FIG. 1 to FIG. 7, the housing 11 includes a housing body 111 and a guide column 112. A portion of the stator assembly 20 is arranged in the housing body 111 along the axial direction (such as the up-down direction shown in FIG. 1) of the housing body 111. The guide column 112 is arranged in the housing body 111. A guide hole 21 is provided on the stator assembly 20. The guide column 112 extends along the axial direction of the stator assembly 20, and the guide column 112 extends into the guide hole 21, so that a third cavity 33 can be defined between the guide column 112 and the guide hole 21.

Therefore, when the stator assembly 20 and the mover component 10 move relative to each other, the cooperation between the guide hole 21 and a guide rod can play a guiding and limiting role in the movement of the guide rod, which can ensure the coaxiality of the stator assembly 20 and the mover component 10, thereby ensuring that the guide rod moves along a set direction and a set trajectory, preventing the guide rod from being separated from the stator assembly 20 in a sliding process, and enabling the guide rod to play a guiding role in the movement of the mover component 10.

Moreover, as shown in FIG. 1, FIG. 2, and FIG. 4 to FIG. 8, the first sliding bearing 41 is arranged between an outer circumferential wall of the guide column 112 and a hole wall of the guide hole 21, so that when the guide rod slides in the guide hole 21, friction between the guide rod and the hole wall of the guide hole 21 can be reduced by the first sliding bearing 41, which is conducive to reducing the wear and prolonging the service life of the linear motor 100.

In addition, as shown in FIG. 1, FIG. 2, and FIG. 4 to FIG. 6, the guide hole 21 is communicated with the second cavity 32. The first cavity 31 is communicated with the guide hole 21 through the first channel 411. Namely, the airflow in the first cavity 31 can flow through the first channel 411 to the guide hole 21 and then flow through the guide hole 21 to the second cavity 32, or the airflow in the second cavity 32 can flow through the guide hole 21 to the first cavity 31 from the first channel 411, so that the first cavity 31 is communicated with the second cavity 32, to meet desired communication requirements. This allows the airflow to flow from both a radial inner side and a radial outer side of the stator assembly 20, which enlarges the flow area and can reduce the resistance to the relative movement between the stator assembly 20 and the mover component 10, making the relative movement between the stator assembly 20 and the mover component 10 smoother. Furthermore, it is convenient for machining and manufacturing and is beneficial to reduce the production costs of the linear motor 100.

In some embodiments, to meet coaxiality requirements of the linear motor 100, the gap between the guide column 112 and the first sliding bearing 41 is small. When the guide column 112 cooperates with the first sliding bearing 41, due to friction between them, for example, when a load is large or the mover component 10 moves along the axial direction of the stator assembly 20 fast, a temperature of the guide column 112 and a the temperature of the first sliding bearing 41 gradually increase, thereby heating both the first sliding bearing 41 and the guide column 112 to expand, which easily leads to interference fit between the guide column 112 and the first sliding bearing 41.

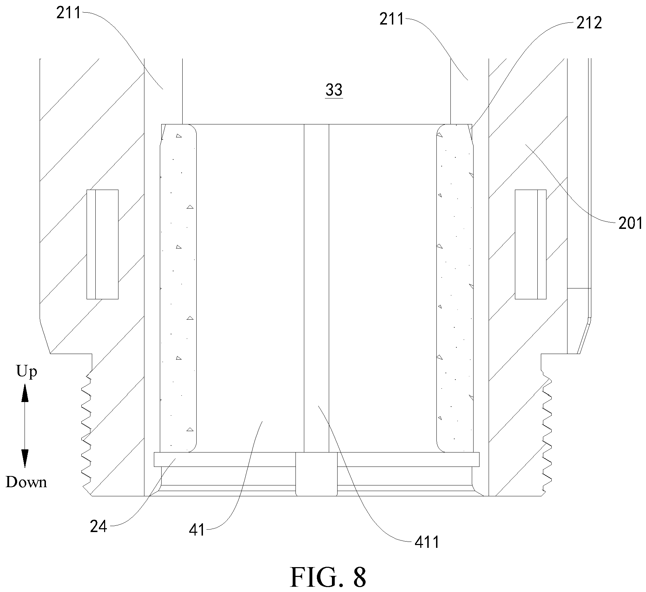

Therefore, as shown in FIG. 7 and FIG. 8, the first channel 411 is provided on the first sliding bearing 41, so that the airflow in the first cavity 31 and the airflow in the guide hole 21 flow towards each other through the first channel 411, which avoids the problem such as blockage, and makes the relative movement between the stator assembly 20 and the mover component 10 smoother.

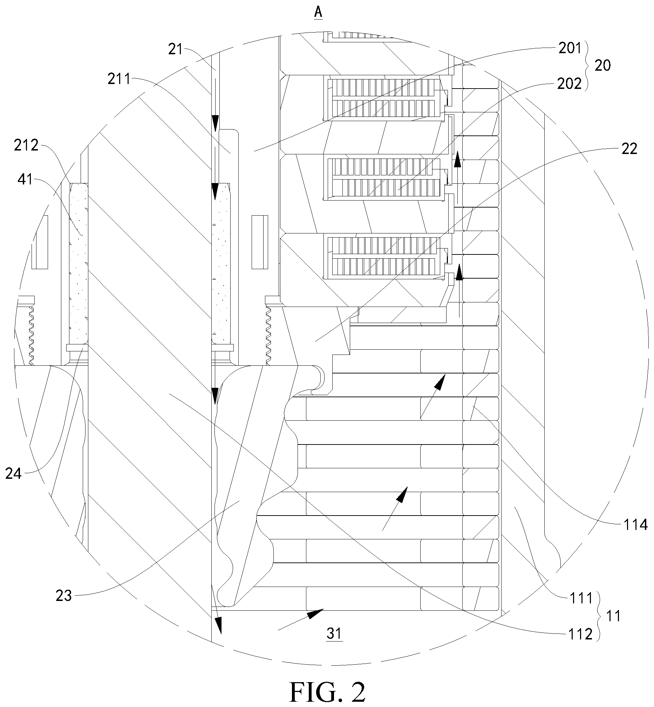

In some embodiments, as shown in FIG. 2 and FIG. 5 to FIG. 8, a third through slot 211 is provided on a hole wall of the guide hole 21. By the third through slot 211, the communication air gap between the first cavity 31 and the second cavity 32 is further enlarged through, so that the first cavity 31 and the guide hole 21 can be communicated with each other by the third through slot 211 and the first channel 411, and the first cavity 31 is communicated with the second cavity 32, meeting desired communication requirements. This allows the airflow to flow from both a radial inner side and a radial outer side of the stator assembly 20, which enlarges the flow area and can reduce the resistance to the relative movement between the stator assembly 20 and the mover component 10, making the relative movement between the stator assembly 20 and the mover component 10 smoother. It is beneficial to prolong the service life of the linear motor 100.

In some embodiments, as shown in FIG. 2 and FIG. 5 to FIG. 8, the third through slot 211 extends along an axial direction (such as an up-down direction shown in FIG. 8) of the guide hole 21, so that the airflow flows through the third through slot 211 more smoothly, and the problem such as blockage is avoided.

In some embodiments, as shown in FIG. 2 and FIG. 5 to FIG. 8, multiple (two or more) third through slots 211 are provided. The multiple third through slots 211 are spaced away from each other along a circumferential direction of the guide hole 21. By the multiple third through slots 211, the flow area can be enlarged, so that the airflow flows more smoothly. Therefore, the resistance to the relative movement between the stator assembly 20 and the mover component 10 can be reduced, making the relative movement between the stator assembly 20 and the mover component 10 smoother.

In some embodiments, as shown in FIG. 2, FIG. 7, and FIG. 8, a mounting slot 212 is provided on a hole wall of the guide hole 21. The first sliding bearing 41 is located in the mounting slot 212, and one end of the first sliding bearing 41 in a lengthwise direction resists against a slot side wall of the mounting slot 212. A first stop member 24 is arranged at another end of the first sliding bearing 41 in the lengthwise direction. The first stop member 24 resists against another end of the first sliding bearing 41 in the lengthwise direction. The first sliding bearing 41 can be limited in the axial direction jointly by the slot side wall of the mounting slot 212 and the first stop member 24, to ensure that the assembling position of the first sliding bearing 41 is accurate and improve the connection stability of the first sliding bearing 41 on the stator assembly 20. The possibility of falling off or movement of the first sliding bearing 41 due to vibration of the stator assembly 20 when the linear motor 100 works can be reduced. Furthermore, the first stop member 24 and the first sliding bearing 41 can be compact in structure by fully using a space in the axial direction of the stator assembly 20.

In some embodiments, the first sliding bearing 41 is in interference fit with the hole wall of the guide hole 21, or the first sliding bearing 41 is connected by a key to ensure reliable fixation of the first sliding bearing 41.

In some embodiments, as shown in FIG. 2, FIG. 7, and FIG. 8, the first stop member 24 is annular and extends along a circumferential direction of the first sliding bearing 41, which can enlarge a contact area between the first stop member 24 and the first sliding bearing 41, thereby enhancing a limiting effect of the first stop member 24 on the first sliding bearing 41, further improving the connection stability of the first sliding bearing 41 on the stator assembly 20, and avoiding the problem such as movement or falling off of the first sliding bearing 41.

In some embodiments, the first stop member 24 may be an elastic retaining ring or a metal ring, so that the first stop member 24 has high structural strength and high wear resistance. This can prevent the movement of the first sliding bearing 41 in the axial direction and is conductive to prolonging the service life of the linear motor 100.

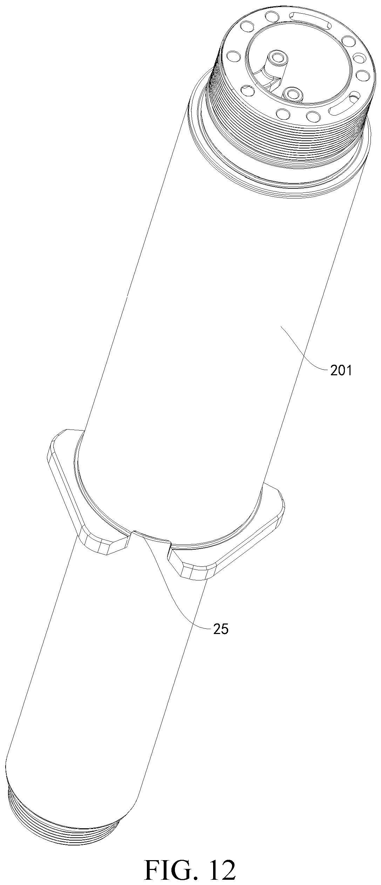

According to some embodiments of the present application, as shown in FIG. 1 and FIG. 12, an opening 25 is provided on the stator assembly 20. The opening 25 is configured to communicate the guide hole 21 with the second cavity 32, which can meet communication requirements of the guide hole (21) and the second cavity 32. In addition, the structure is simple. It is convenient to machine and manufacture the stator assembly 20 and is conducive to reducing the production costs.

In some embodiments, as shown in FIG. 1 to FIG. 5, the stator assembly 20 includes a stator mandrel 201 and a winding. The opening 25 is provided on the stator mandrel 201, and the winding sleeves the stator mandrel 201. The opening 25 is located on a side (such as an upper side shown in FIG. 1) of the winding close to the second cavity 32. The linear motor 100 further includes a conductive component. The conductive component is located in the stator mandrel 201, and the conductive component is connected to the winding through the opening 25. A connection between the conductive component and the winding can be achieved. It is convenient for the conductive component to supply power to the winding, enabling the linear motor to work normally. Moreover, the opening 25 can meet requirements of ventilation and electrical connection, so that the structure is compact, and the structural strength of the stator assembly 20 is ensured.

In some embodiments of the present application, as shown in FIG. 7 and FIG. 8, the first channel 411 extends along the axial direction (such as an up-down direction shown in FIG. 8) of the first sliding bearing 41, so that the airflow flows through the first channel 411 more smoothly, and the problem such as blockage is avoided. Furthermore, the structure is simple. It is convenient to machine and manufacture the first sliding bearing 41 and is conducive to reducing the production costs.

According to some embodiments of the present application, as shown in FIG. 7, FIG. 8, and FIG. 10, multiple (two or more) first channels 411 are provided. The multiple first channels 411 are spaced away from each other along a circumferential direction of the first sliding bearing 41. By the multiple first channels 411, the flow area can be enlarged, so that the airflow flows more smoothly. Therefore, the resistance to the relative movement between the stator assembly 20 and the mover component 10 can be reduced, making the relative movement between the stator assembly 20 and the mover component 10 smoother.

In some embodiments, the multiple first channels 411 may be multiple through holes provided on the first sliding bearing 41. Alternatively, the multiple first channels 411 may be multiple through slots provided on the first sliding bearing 41, as shown in FIG. 10. Alternatively, the multiple first channels 411 may be through holes and through slots which are provided on the first sliding bearing 41. These situations can meet requirements for enlarging the communication air gap between the first cavity 31 and the second cavity 32. It is conductive to enlarging the flow area. In addition, the structure is simple, and it is convenient for machining and manufacturing.

In some embodiments, as shown in FIG. 7, FIG. 10, and FIG. 13, the multiple first channels 411 are grooves located on an inner circumferential wall of the first sliding bearing 41, so that the first channels 411 are simple in structure. It is convenient to machine and manufacture the first channels 411 and is conductive to reducing the production costs of the first sliding bearing 41.

According to some embodiments of the present application, as shown in FIG. 7, FIG. 10, and FIG. 13, the multiple first channels 411 include first grooves 81 and second grooves 82. In a case of meeting flow requirements of the airflow, the impact caused by the multiple first channels 411 on the inner circumferential wall of the first sliding bearing 41 on the precision of the inner circumferential wall of the first sliding bearing 41 can be avoided, and the bearing capacity of the first sliding bearing 41 can be ensured.

In addition, as shown in FIG. 7 and FIG. 10, the first grooves 81 and the second grooves 82 are oppositely arranged, namely, the first grooves 81 and the second grooves 82 are symmetrically arranged along 180°. To assemble the first sliding bearing 41, the opposite first grooves 81 and second grooves 82 can facilitate pressing and mounting of the first sliding bearing 41, so that it is more convenient to assemble the first sliding bearing 41, and it is conductive to improving the assembling efficiency.

In some embodiments, grease is provided between the first sliding bearing 41 and the mover component 10. The grease can lubricate the relative movement between the stator assembly 20 and the mover component 10, making the relative movement between the stator assembly 20 and the mover component 10 smoother and effectively reducing friction.

In the related art, during operation of the linear motor, the grease on the inner circumferential wall of the first sliding bearing is easily carried away when the mover component and the stator assembly move relative to each other, consequently reducing the amount of the grease, deteriorating the lubrication environment, increasing the wear of the first sliding bearing, and shortening the service life.

Therefore, in some embodiments, as shown in FIG. 7, FIG. 8, and FIG. 10, grease is provided in the first channels 411, and the grease does not block the first channels 411. A portion of the grease can be stored through the first channels 411, thereby increasing the amount of grease between the first sliding bearing 41 and the mover component 10 as backup stored grease. When the mover component 10 and the stator assembly 20 move relative to each other, the grease stored in the first channels 411 can be replenished for lubrication in a timely manner, which effectively improves the lubrication environment between the first sliding bearing 41 and the mover component 10. Continuously lubricating the first sliding bearing 41 can improve the lubrication environment between the mover component 10 and the first sliding bearing 41, reduce the wear of the inner circumferential wall of the first sliding bearing 41, and help prolong the service life. Moreover, as the grease does not block the first channels 411, requirements for enlarging the communication air gap between the first cavity 31 and the second cavity 32 can be met, which is conductive to enlarging the flow area. In addition, the structure is simple, and it is convenient for machining and manufacturing.

In this embodiment of the present application, the specific shape of the first channel 411 can be set according to an actual situation. For example, the first channel 411 may be formed as a square slot, a triangular slot, and the like.

For example, in some embodiments, as shown in FIG. 10, the first channel 411 is formed as an arc-shaped slot. This can avoid stress concentration and other problems on the first sliding bearing 41, and is conducive to improving the structural strength of the first sliding bearing 41.

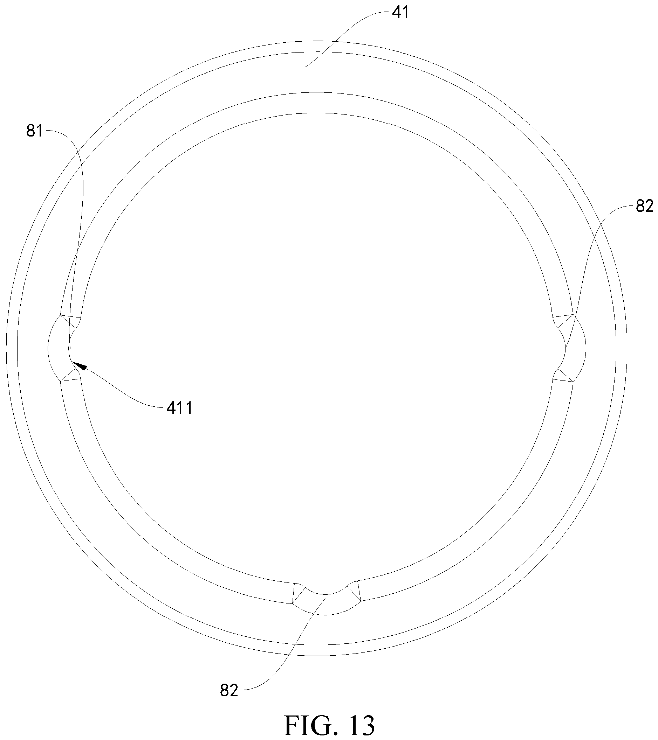

In some embodiments of the present application, as shown in FIG. 13, the multiple first channels 411 are non-uniformly distributed along the circumferential direction of the first sliding bearing 41, namely, along the circumferential direction of the first channels 411. A spacing between any two adjacent first channels 411 among the multiple first channels 411 is different, which can effectively reduce noise, vibration, harshness (NVH), and other problems, and meet desired usage requirements.

For example, in some embodiments, when the linear motor 100 is applied to a suspension assembly of a vehicle, since different portions of the linear motor 100 in a circumferential direction have different bearing capacities, relatively sparse first channels 411 are provided at positions with high bearing capacity, and relatively dense first channels 411 are provided at positions opposite to the positions with high bearing capacity, so that the service life of the first sliding bearing 41 can be prolonged.

According to some embodiments of the present application, as shown in FIG. 1, FIG. 3 to FIG. 6, and FIG. 9, an end (such as an upper end shown in FIG. 1) of the housing 11 in the axial direction is open, so that an open hole 113 can be formed. A portion of the stator assembly 20 is arranged in the open hole 113 in a penetrating manner, so that the portion of the stator assembly 20 can be located in the housing 11 through the open hole 113, and requirements for the relative movement between the mover component 10 and the stator assembly 20 can be met.

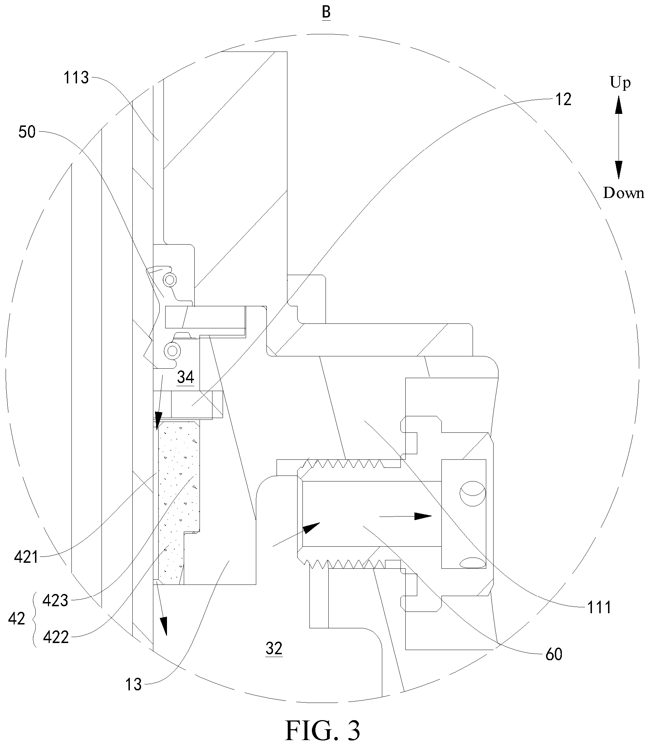

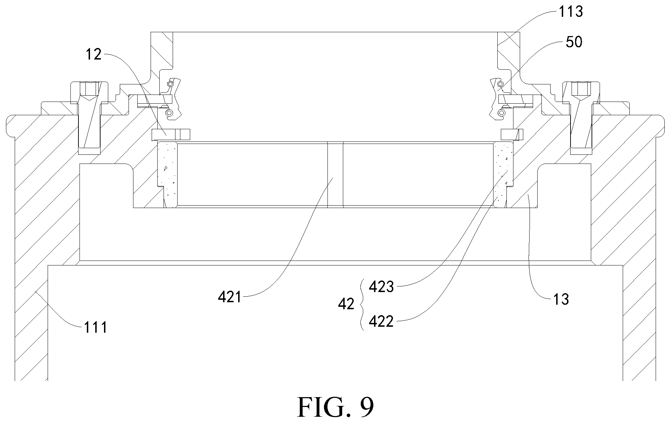

In addition, as shown in FIG. 3 and FIG. 9, a sealing member 50 is arranged between a hole wall of the open hole 113 and an outer circumferential wall of the stator assembly 20. By the sealing member 50, requirements for sealing between the hole wall of the open hole 113 and the outer circumferential wall of the stator assembly 20 can be met, and external impurities (such as dust and water) can be effectively prevented from entering the linear motor 100 through the open hole 113. Therefore, the internal structures of the linear motor 100 can be protected, and it is conductive to prolonging the service life of the linear motor 100. For example, the sealing member 50 may be an oil seal.

In some embodiments of the present application, as shown in FIG. 1, FIG. 3, FIG. 4, FIG. 6, FIG. 9, and FIG. 11, a second sliding bearing 42 is further arranged between the hole wall of the open hole 113 and the outer circumferential wall of the stator assembly 20. By the second sliding bearing 42, friction between the stator assembly 20 and the mover component 10 can be reduced. This effectively reduces the energy loss, is conductive to reducing the wear, and prolongs the service life of the linear motor 100. The second sliding bearing 42 is located on a side (such as a lower side shown in FIG. 3) of the sealing member 50 close to the second cavity 32, so that the sealing member 50 can prevent external impurities from entering the second sliding bearing 42 through the open hole 113, to avoid the wear of the second sliding bearing 42. It is conductive to prolonging the service life.

In some embodiments, as shown in FIG. 3, FIG. 9, and FIG. 11, a fourth cavity 34 is defined between the second sliding bearing 42 and the sealing member 50. A second channel 421 is provided on the second sliding bearing 42, to communicate the second cavity 32 with the fourth cavity 34. Therefore, the airflow flows between the second cavity 32 and the fourth cavity 34 by the second channel 421. It is conductive to adjusting the pressure difference between the fourth cavity 34 and the second cavity 32 to avoid the problem such as a failure of the sealing member 50 caused by the pressure. Reliable sealing of the sealing member 50 is ensured, which is conductive to prolonging the service life of the linear motor 100. Moreover, it is more convenient to machine the second channel 421 on the second sliding bearing 42, achieving easy machining. It is beneficial to reduce the production costs.

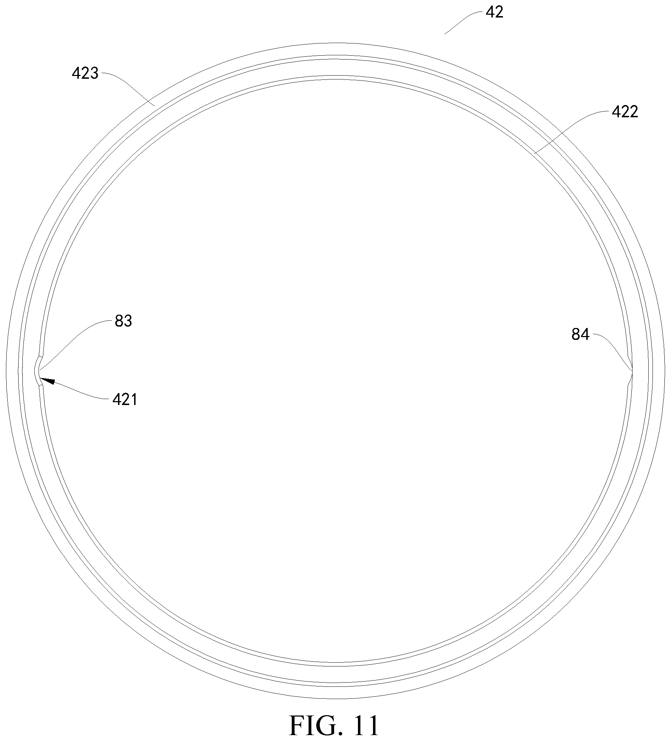

In some embodiments, the second channel 421 may be a through hole provided on the second sliding bearing 42, or the second channel 421 may be a through slot provided on the second sliding bearing 42, as shown in FIG. 11. Both the through hole and the through slot can meet requirements for enlarging the communication air gap between the second cavity 32 and the fourth cavity 34. In addition, the structure is simple, and it is convenient for machining and manufacturing.

In some embodiments, the second sliding bearing 42 may be integrally formed, which facilitates the machining and manufacturing of the second sliding bearing 42. It is beneficial to reduce the production costs. For example, the second sliding bearing 42 may be formed by metallurgic sintering and pressing on powder. An air hole is provided on the second sliding bearing 42. The air hole is filled with grease through high pressure. The grease can lubricate the relative movement between the stator assembly 20 and the mover component 10, making the relative movement between the stator assembly 20 and the mover component 10 smoother and effectively reducing friction.

In some embodiments, the outer circumferential wall of the second sliding bearing 42 is in interference fit with the hole wall of the open hole 113, to ensure reliable fixation of the second sliding bearing 42 on the stator assembly 20.

According to some embodiments of the present application, as shown in FIG. 3, FIG. 9, and FIG. 11, the second sliding bearing 42 includes a body piece 422. The stator assembly 20 is arranged in the body piece 422 in a penetrating manner. The stator assembly 20 can be guided by the body piece 422, to ensure reliable movement of the stator assembly 20. The second channel 421 is provided on the body piece 422 to facilitate the airflow to flow in the second channel 421 and facilitate machining and manufacturing.

As shown in FIG. 3, FIG. 9, and FIG. 11, the second sliding bearing 42 further includes a stop piece 423. The stop piece 423 is arranged on an outer circumferential wall of the body piece 422, and the stop piece 423 extends along a circumferential direction of the body piece 422. An end (such as a lower end shown in FIG. 3) of the stop piece 423 in the axial direction resists against the mover component 10, so that the mover component 10 can limit the second sliding bearing 42. It ensures that the assembling position of the second sliding bearing 42 on the housing 11 is accurate.

In some embodiments, as shown in FIG. 3 and FIG. 9, a second stop member 12 is arranged on a side (such as an upper side shown in FIG. 3) of the stop piece 423 facing the open hole 113. The second stop member 12 resists against the side of the stop piece 423 facing the open hole 113. An end of the stop piece 423 in the axial direction resists against the mover component 10, and the second stop member 12 resists against the side of the stop piece 423 facing the open hole 113, so that the second sliding bearing 42 can be limited in the axial direction, which ensures that the assembling position of the second sliding bearing 42 is accurate and improves the connection stability of the second sliding bearing 42 on the mover component 10. The possibility of falling off or movement of the second sliding bearing 42 due to vibration of the mover component 10 when the linear motor 100 works can be reduced. Furthermore, the second stop member 12 and the second sliding bearing 42 can be compact in structure by fully using a space in the axial direction of the mover component 10.

In some embodiments, as shown in FIG. 3 and FIG. 9, the second stop member 12 is annular and extends along a circumferential direction of the second sliding bearing 42, which can enlarge a contact area between the second stop member 12 and the second sliding bearing 42, thereby enhancing a limiting effect of the second stop member 12 on the second sliding bearing 42, further improving the connection stability of the second sliding bearing 42 on the mover component 10, and avoiding the problem such as movement or falling off of the second sliding bearing 42.

In some embodiments, the second stop member 12 may be an elastic retaining ring or a metal ring, so that the second stop member 12 has high structural strength and high wear resistance. This can prevent the movement of the second stop member 12 in the axial direction and is conductive to prolonging the service life of the linear motor 100.

According to some embodiments of the present application, as shown in FIG. 1, FIG. 3 to FIG. 6, and FIG. 9, a boss 13 is arranged on an inner wall surface of an end, provided with the open hole 113, of the housing 11. The boss 13 surrounds the open hole 113, which is conducive to improving the structural strength of the housing 11. Furthermore, a portion of the second sliding bearing 42 is located between an inner circumferential wall of the boss 13 and the outer circumferential wall of the stator assembly 20, which can facilitate the placement of the second sliding bearing 42 and reduce the thickness of the housing 11 provided with the open hole 113. It is conducive to reducing the material costs of the housing 11.

In some embodiments, as shown in FIG. 3 and FIG. 9, the sealing member 50 and the second stop member 12 are separated in the axial direction of the housing 11, which can avoid interference between the sealing member 50 and the second stop member 12, ensure a sealing effect of the sealing member 50 and a limiting effect of the second stop member 12 on the second sliding bearing 42, and meet desired usage requirements.

In some embodiments of the present application, as shown in FIG. 3, FIG. 9, and FIG. 11, the second channel 421 extends along the axial direction (such as an up-down direction shown in FIG. 3) of the second sliding bearing 42, so that the airflow flows through the second channel 421 more smoothly, and the problem such as blockage is avoided. Furthermore, the structure is simple. It is convenient to machine and manufacture the second sliding bearing 42 and is conducive to reducing the production costs.

According to some embodiments of the present application, as shown in FIG. 11, multiple (two or more) second channels 421 are provided. The multiple second channels 421 are spaced away from each other along a circumferential direction of the second sliding bearing 42. By the multiple second channels 421, the flow area can be enlarged, so that the airflow flows more smoothly. The problem such as a failure of the sealing member 50 due to the pressure is avoided, and reliable sealing of the sealing member 50 is ensured.

In some embodiments, as shown in FIG. 11, the multiple second channels 421 are grooves located on an inner circumferential wall of the second sliding bearing 42, so that the second channels 421 are simple in structure. It is convenient to machine and manufacture the second channels 421 and is conductive to reducing the production costs of the second sliding bearing 42.

According to some embodiments of the present application, as shown in FIG. 11, the multiple second channels 421 include third grooves 83 and fourth grooves 84. In a case of meeting flow requirements of the airflow, the impact caused by the multiple second channels 421 on the inner circumferential wall of the second sliding bearing 42 on the precision of the inner circumferential wall of the second sliding bearing 42 can be avoided, and the bearing capacity of the second sliding bearing 42 can be ensured.

As shown in FIG. 11, the third grooves 83 and the fourth grooves 84 are oppositely arranged, namely, the third grooves 83 and the fourth grooves 84 are symmetrically arranged along 180°. To assemble the second sliding bearing 42, the opposite third grooves 83 and fourth grooves 84 can facilitate pressing and mounting of the second sliding bearing 42, so that it is more convenient to assemble the second sliding bearing 42, and it is conductive to improving the assembling efficiency.

In this embodiment of the present application, the specific shape of the second channel 421 can be set according to an actual situation. For example, the second channel 421 may be formed as a square slot, a triangular slot, and the like.

As shown in FIG. 11, the second channel 421 is formed as an arc-shaped slot. This can avoid stress concentration and other problems on the second sliding bearing 42, and is conducive to improving the structural strength of the second sliding bearing 42.

In some embodiments of the present application, the multiple second channels 421 are non-uniformly distributed along the circumferential direction of the second sliding bearing 42, namely, along the circumferential direction of the second sliding bearing 42. A spacing between any two adjacent second channels 421 among the multiple second channels 421 is different, which can effectively reduce noise, vibration, harshness (NVH), and other problems, and meet desired usage requirements.

In some embodiments, when the linear motor 100 is applied to a suspension assembly of a vehicle, since different portions of the linear motor 100 in a circumferential direction have different bearing capacities, relatively sparse second channels 421 are provided at positions with high bearing capacity, and relatively dense second channels 421 are provided at positions opposite to the positions with high bearing capacity, so that the service life of the second sliding bearing 42 can be prolonged.

In some embodiments, grease is provided between the second sliding bearing 42 and the stator assembly 20. The grease can lubricate the relative movement between the stator assembly 20 and the mover component 10, making the relative movement between the stator assembly 20 and the mover component 10 smoother and effectively reducing friction.

In the related art, during operation of the linear motor, the grease on the inner circumferential wall of the second sliding bearing is easily carried away when the mover component and the stator assembly move relative to each other, consequently reducing the amount of the grease, deteriorating the lubrication environment, increasing the wear of the second sliding bearing, and shortening the service life.

Therefore, in some embodiments of the present application, as shown in FIG. 3, FIG. 9, and FIG. 11, grease is provided in the second channels 421, and the grease does not block the second channels 421. A large amount of grease can be stored by the second channels 421, thereby increasing the amount of grease between the second sliding bearing 42 and the stator assembly 20 as backup stored grease. When the mover component 10 and the stator assembly 20 move relative to each other, the grease stored in the second channels 421 can be replenished for lubrication in a timely manner, which effectively improves the lubrication environment between the second sliding bearing 42 and the stator assembly 20. Continuously lubricating the second sliding bearing 42 can improve the lubrication environment between the stator assembly 20 and the second sliding bearing 42, reduce the wear of the inner circumferential wall of the second sliding bearing 42, and help prolong the service life.

In some embodiments where the multiple second channels 421 are provided, the multiple second channels 421 may be multiple through holes provided on the second sliding bearing 42. Alternatively, the multiple second channels 421 may be multiple through slots provided on the second sliding bearing 42, as shown in FIG. 11. Alternatively, the second channels 421 may be through holes and through slots which are provided on the second sliding bearing 42. These situations can meet requirements for enlarging the communication air gap between the second cavity 32 and the fourth cavity 34. It is conductive to enlarging the flow area. In addition, the structure is simple, and it is convenient for machining and manufacturing.

In some embodiments, as shown in FIG. 3, FIG. 9, and FIG. 11, the through slot provided on the second sliding bearing 42 is located on the inner circumferential wall of the second sliding bearing 42, and a through hole is provided on the second sliding bearing 42. Grease is provided in the through slot provided on the second sliding bearing 42. A large amount of grease can be stored by the through slot provided on the second sliding bearing 42, thereby increasing the amount of grease between the first sliding bearing 41 and the mover component 10 as backup stored grease. Moreover, the through hole provided on the second sliding bearing 42 can meet requirements for communicating the second cavity 32 with the fourth cavity 34. It is conductive to enlarging the flow area. In addition, the structure is simple, and it is convenient for machining and manufacturing.

According to some embodiments of the present application, as shown in FIG. 1, FIG. 3, FIG. 5, and FIG. 6, a ventilation valve 60 is arranged on a side wall of the housing 11. The ventilation valve 60 can communicate the first cavity 31 or the second cavity 32 with an external environment. Namely, the first cavity 31 and the external environment can be communicated through the ventilation valve 60, or the second cavity 32 and the external environment can be communicated through the ventilation valve 60, so that air in the first cavity 31 or the second cavity 32 can be exchanged with air in the external environment. The pressure in the first cavity 31 or the second cavity 32 can be quickly adjusted to reduce the resistance to the relative movement between the stator assembly 20 and the mover component 10. For example, the air resistance caused by changes in the volumes of the first cavity 31 and the second cavity 32 during compression and stretching can be reduced, so that the stator assembly 20 and the mover component 10 move more smoothly relative to each other. In addition, a good heat dissipation effect can be achieved, which is conductive to prolonging the service life of the linear motor 100. In addition, the ventilation valve 60 can play a role in dust and water prevention, to prevent water or dust from entering the linear motor 100, thereby improving the reliability of the linear motor 100 and prolonging the service life of the linear motor 100.

The airflow can flow through the air gap between the stator assembly 20 and the mover component 10, and the airflow can flow between the first cavity 31 and the second cavity 32 through the first channel 411, so that the first cavity 31 or the second cavity 32 can exchange air with each other through the ventilation valve 60, facilitating the air in the first cavity 31 and the second cavity 32 to flow between the first cavity 31 and the second cavity 32. This is conductive to quickly adjusting the pressure in the first cavity 31 and the pressure in the second cavity 32 and reducing or avoiding a pressure difference between the first cavity 31 and the second cavity 32, so that the pressure in the first cavity 31 and the pressure in the second cavity 32 are balanced, thereby reducing or avoiding fluctuation caused by the impact of the pressure difference on the reciprocating motion of the linear motor 100 and improving the sensitivity.

The external environment may be a space outside the linear motor 100. When the external environment is the space outside the linear motor 100, the external environment can be a portion of an external air space. The external environment may alternatively be a space located inside the linear motor 100. When the external environment is the space located inside the linear motor 100, the external environment may be communicated with external air, or the external environment may be isolated from the external air.

In some embodiments, as shown in FIG. 3, the ventilation valve 60 does not extend beyond the outer circumferential wall of the housing 11, so that the overall structure of the ventilation valve 60 and the mover component 10 can be more compact, and the problem of interference with structures outside the mover component 10 caused by the fact that the ventilation valve 60 extends beyond the outer circumferential wall of the housing 11 can be avoided.

In some embodiments, the ventilation valve 60 is detachably mounted on a side wall of the housing 11 for ease of maintenance or replacement of the ventilation valve 60.

In some embodiments, as shown in FIG. 3, the ventilation valve 60 is in threaded connection with the side wall of the housing 11, which can simplify a connection way between the ventilation valve 60 and the mover component 10, and the connection is highly stable. It is convenient to remove or mount the ventilation valve 60 on the housing 11.

In some embodiments, as shown in FIG. 1, FIG. 2, FIG. 4, FIG. 5, and FIG. 6, a shock absorbing element 23 is arranged at a lower end of the stator assembly 20. When the mover component 10 moves along the axial direction of the stator assembly 20, the shock absorbing element 23 can prevent the problems such as vibration and noise caused by direct contact between the mover component 10 and the stator assembly 20, thereby ensuring reliable operations of the linear motor 100.

An electromagnetic shock absorber 200 according to an embodiment of the present application includes the linear motor 100 according to the above embodiment of the present application. As the linear motor 100 according to this embodiment of the present application have the above beneficial technical effects, in the electromagnetic shock absorber 200 according to this embodiment of the present application, the portion of the stator assembly 20 is arranged in the housing 11 along the axial direction of the housing 11. The first cavity 31 and the second cavity 32 are respectively arranged between the two ends of the stator core 202 of the stator assembly 20 in the axial direction and the housing 11. The first sliding bearing 41 is arranged between the stator assembly 20 and the mover component 10. The first channel 411 is provided on the first sliding bearing 41 to enlarge the communication air gap between the first cavity 31 and the second cavity 32. Therefore, an airflow can flow through an air gap between the stator assembly 20 and the mover component 10. Moreover, the airflow can flow between the first cavity 31 and the second cavity 32 through the first channel 411, which enlarges a flow area between the first cavity 31 and the second cavity 32, facilitates the adjustment on a pressure difference between the first cavity 31 and the second cavity 32, enables the stator assembly 20 and the mover component 10 to move with each other more smoothly, and is beneficial to prolong the service life of the linear motor 100. Furthermore, it is more convenient and easier to machine the first channel 411 on the first sliding bearing 41. This is conductive to reducing the production costs.

A vehicle according to an embodiment of the present application includes the electromagnetic shock absorber 200 according to the above embodiment of the present application. As the electromagnetic shock absorber 200 according to this embodiment of the present application has the above beneficial technical effects, in the vehicle according to this embodiment of the present application, the portion of the stator assembly 20 is arranged in the housing 11 along the axial direction of the housing 11. The first cavity 31 and the second cavity 32 are respectively arranged between the two ends of the stator core 202 of the stator assembly 20 in the axial direction and the housing 11. The first sliding bearing 41 is arranged between the stator assembly 20 and the mover component 10. The first channel 411 is provided on the first sliding bearing 41 to enlarge the communication air gap between the first cavity 31 and the second cavity 32. Therefore, an airflow can flow through an air gap between the stator assembly 20 and the mover component 10. Moreover, the airflow can flow between the first cavity 31 and the second cavity 32 through the first channel 411, which enlarges a flow area between the first cavity 31 and the second cavity 32, facilitates the adjustment on a pressure difference between the first cavity 31 and the second cavity 32, enables the stator assembly 20 and the mover component 10 to move with each other more smoothly, and is beneficial to prolong the service life of the linear motor 100. Furthermore, it is more convenient and easier to machine the first channel 411 on the first sliding bearing 41. This is conductive to reducing the production costs.

In some embodiments, when the linear motor 100 is applied to the vehicle, the stator assembly 20 can be connected to a vehicle body of the vehicle, and the mover component 10 can be connected to wheels of the vehicle. For example, when the linear motor 100 is vertically placed, an upper end of the stator assembly 20 is connected to the vehicle body, and a lower end of the mover component 10 is connected to the wheels, so that mounting requirements for the linear motor 100 can be met, to ensure that the linear motor 100 is reliably mounted on the vehicle. The mover component 10 can move relative to the stator assembly 20 in an up and down reciprocating linear mode, to meet desired usage requirements.

In some embodiments, as shown in FIG. 1, FIG. 4, and FIG. 6, the housing 11 is provided with a lower fork arm 70. The lower fork arm 70 is connected to the wheels to meet desired connection requirements.

Other configurations and operations of the linear motor 100, the electromagnetic shock absorber 200, and the vehicle according to the embodiments of the present application are known to those of ordinary skill in the art and will not be described in detail here.

In addition, in the description of the present application, it should be noted that, unless otherwise explicitly specified or defined, the terms such as "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two elements. For those of ordinary skill in the art, the specific meanings of the aforementioned terms in the present application can be understood according to specific conditions.

In description of this specification, description of reference terms such as "an embodiment", "specific embodiments", or "an example", means including specific features, structures, materials, or features described in the embodiment or example in at least one embodiment or example of the present application. In this specification, the schematic representations of the above terms are not necessarily intended to refer to the same embodiment or example. Furthermore, the specific features, structures, materials or characteristics described may be combined in any suitable manner in any one or more embodiments or examples.

Although the embodiments of the present application have been shown and described, a person of ordinary skill in the art should understand that: various changes, modifications, substitutions, and variations can be made to these embodiments without departing from the principle and purpose of the present application. The scope of the present application is defined by the claims and their equivalents.

In the drawings:
100: linear motor; 200: electromagnetic shock absorber;
10: mover component; 11: housing; 12: second stop member; 13: boss; 111: housing body; 112: guide column; 113: open hole; 114: magnetic steel;
20: stator assembly; 21: guide hole; 22: limiting member; 23: shock absorbing member; 24: first stop member; 25: opening; 201: stator mandrel; 202: stator core; 211: third through slot; 212: mounting slot;
31: first cavity; 32: second cavity; 33: third cavity; 34: fourth cavity;
41: first sliding bearing; 42: second sliding bearing; 411: first channel; 421: second channel; 422: body piece; 423: stop piece;
50: sealing member;
60: ventilation valve;
70: lower fork arm;
81: first groove; 82: second groove; 83: third groove; and 84: fourth groove.

## Claims

1. A linear motor, comprising:
a mover component (10), the mover component (10) having a housing (11); and
a stator assembly (20), a portion of the stator assembly (20) being arranged in the housing (11) along an axial direction of the housing (11), the stator assembly having a stator core (202), and a first cavity (31) and a second cavity (32) being respectively arranged between a first end and a second end of the stator core (202) in an axial direction and the housing (11),
a first sliding bearing (41) being arranged between the stator assembly (20) and the mover component (10), and a first channel (411) being provided on the first sliding bearing (41) to enlarge a communication air gap for the first cavity (31) and the second cavity (32).

2. The linear motor according to claim 1, wherein the housing (11) comprises:
a housing body (111), a portion of the stator assembly (20) being arranged in the housing body (111) along an axial direction of the housing body (111); and
a guide column (112), the guide column (112) being arranged in the housing body (111), a guide hole (21) being provided on the stator assembly (20), the guide column (112) extending along an axial direction of the stator assembly (20) into the guide hole (21), the guide hole (21) being communicated with the second cavity (32), the first sliding bearing (41) being arranged between an outer circumferential wall of the guide column (112) and a hole wall of the guide hole (21), and the first cavity (31) being communicated with the guide hole (21) through the first channel (411).

3. The linear motor according to claims 1 or 2, wherein an opening (25) is provided on the stator assembly (20), and the opening (25) is configured to communicate the guide hole (21) with the second cavity (32).

4. The linear motor according to any one of claims 1 to 3, wherein the stator assembly (20) comprises:
a stator mandrel (201), the opening (25) being provided on the stator mandrel (201); and
a winding, the winding sleeving the stator mandrel (201), the opening (25) being located on a side of the winding close to the second cavity (32), the linear motor (100) further comprising a conductive component, and the conductive component being located in the stator mandrel (201) and being connected to the winding through the opening (25).

5. The linear motor according to any one of claims 1 to 4, wherein the first channel (411) extends along an axial direction of the first sliding bearing (41).

6. The linear motor according to any one of claims 1 to 5, wherein a plurality of first channels (411), spaced away from each other along a circumferential direction of the first sliding bearing (41), are provided.

7. The linear motor according to claim 6, wherein the plurality of first channels (411) are grooves located on an inner circumferential wall of the first sliding bearing (41); and/or
wherein the plurality of first channels (411) comprise first grooves (81) and second grooves (82), and the first grooves (81) and the second grooves (82) are oppositely arranged; and/or
wherein the plurality of first channels (411) are non-uniformly distributed along the circumferential direction of the first sliding bearing (41); and/or
wherein grease is provided in the first channels (411), and the grease does not block the first channels (411).

8. The linear motor according to any one of claims 1 to 7, wherein an open hole (113) is located in an open end of the housing (11) in an axial direction, a portion of the stator assembly (20) is arranged in the open hole (113) in a penetrating manner, and a sealing member (50) is arranged between a hole wall of the open hole (113) and an outer circumferential wall of the stator assembly (20).

9. The linear motor according to claim 8, wherein a second sliding bearing (42) is further arranged between the hole wall of the open hole (113) and the outer circumferential wall of the stator assembly (20), and the second sliding bearing (42) is located on a side of the sealing member (50) close to the second cavity (32).

10. The linear motor according to claim 9, wherein a fourth cavity (34) is defined between the second sliding bearing (42) and the sealing member (50), and a second channel (421) is provided on the second sliding bearing (42), to communicate the second cavity (32) with the fourth cavity (34).

11. The linear motor according to claim 10, wherein the second channel (421) extends along an axial direction of the second sliding bearing (42); and/or
wherein the second sliding bearing (42) comprises: a body piece (422), the stator assembly (20) being arranged in the body piece (422) in a penetrating manner, and the second channel (421) being arranged on the body piece (422); and a stop piece (423), the stop piece (423) being arranged on an outer circumferential wall of the body piece (422) and extending along a circumferential direction of the body piece (422), and an end of the stop piece (423) in an axial direction resisting against the housing (11).

12. The linear motor according to any one of claims 12, wherein a boss (13) is arranged on an inner wall surface of the end, provided with the open hole (113), of the housing (11), the boss (13) surrounds the open hole (113), and a portion of the second sliding bearing (42) is located between an inner circumferential wall of the boss (13) and the outer circumferential wall of the stator assembly (20).

13. The linear motor according to any one of claims 1 to 12, wherein a ventilation valve is arranged on a side wall of the housing (11) to communicate the first cavity (31) or the second cavity (32) with an external environment.

14. An electromagnetic shock absorber, comprising the linear motor (100) according to any one of claims 1 to 13.

15. A vehicle, comprising the electromagnetic shock absorber according to claim 14.
